# EUROPÄISCHE PATENTANMELDUNG

(11) **EP 4 729 804 A1**
(43) Veröffentlichungstag der Anmeldung: **22.04.2026**
(21) Anmeldenummer: 24207373.2
(22) Anmeldetag: 18.10.2024
(51) Int. Cl.: F16H 1/48, F03D 13/10, F03D 15/00, F03D 80/70, F16C 35/067, F16H 57/021, F16H 57/023, F16H 57/08

(54) **GETRIEBEANTRIEBSSTRANG MIT VERKIPPUNGSAUSGLEICH**

(71) Anmelder: Flender GmbH, 46395 Bocholt (DE)
(72) Erfinder: BUSSMANN, Tobias, 46395 Bocholt (DE); BARTHEL, Thomas, 46395 Bocholt (DE)
(74) Vertreter: Michalski Hüttermann & Partner Patentanwälte mbB

(57) **Zusammenfassung**

Getriebeantriebsstrang 10 mit einer Triebstrangachse A_{D} für eine Windkraftanlage 100, mit einem Getriebegehäuse 12, einer ersten und zumindest einer weiteren um die Triebstrangachse A_{D} drehbare Planetenstufe und/oder Stirnradstufe 20, 22, wobei ein Hohlrad 14 der ersten Planetenstufe 12 als Gehäusekomponente des Getriebegehäuses 12 ausgebildet ist und die erste Planetenstufe 20 einen Planetenträger 16 mit darin aufgenommenen Planetenrädern 18 aufweist, wobei der Planetenradträger 16 zu einer ersten axialen Seite mit einer ersten Lagerung 26 und zu einer zweiten axialen Seite mit einer zweiten Lagerung 32 gegenüber dem Getriebegehäuse 12 drehbar gelagert ist. Ein Lagersitz 28 der ersten Lagerung 26 und ein Lagersitz 34 der zweiten Lagerung 32 weisen einen radialen Versatz Vr zueinander auf. In einem belasteten Zustand ist die Verkippung zwischen der Verzahnung aufgehoben.

## Beschreibung

Die Erfindung betrifft einen Getriebeantriebsstrang mit einer Triebstrangachse A_{D} für eine Windkraftanlage, umfassend ein Getriebegehäuse, eine erste und zumindest eine weitere um die Triebstrangachse drehbare Planetenstufe und/oder Stirnradstufe, wobei ein Hohlrad der ersten Planetenstufe als Gehäusekomponente des Getriebegehäuses ausgebildet ist und die erste Planetenstufe einen Planetenträger mit darin aufgenommenen Planetenrädern aufweist, wobei der Planetenradträger zu einer ersten axialen Seite mit einer ersten Lagerung und zu einer zweiten axialen Seite mit einer zweiten Lagerung gegenüber dem Getriebegehäuse drehbar gelagert ist.

Für Windkraftanlagen können sogenannte Vierpunkt-Lagerungen - auch aufgelöste Lagerung genannt - mit doppelt gelagerter Rotorwelle zur Aufnahme von Biegemomenten und angebundener Getriebe/Generator-Einheit mit Drehmomentstütze vorgesehen sein. Bei dieser Konfiguration wird die Gewichtskraft der Getriebe/Generator-Einheit nicht von der Umgebungsstruktur - in der Regel der Maschinenträger zur Anbindung an den Turm - getragen, sondern von der Rotorwelle und deren Lagerung im Lagergehäuse. Als Gegengewicht zu der Gewichtskraft der Getriebe/Generator-Einheit fungiert die Gewichtskraft des Rotors und der Rotornabe.

Für Windkraftanlagen können allerdings auch sogenannte Zweipunkt-Lagerungen mit Kupplung zwischen Rotorwelle und Getriebeeingang vorgesehen sein. Der Getriebeeingang wird hier in der Regel von einem Planetenradträger gebildet. Durch das Eigengewicht des Rumpfgetriebes und infolge von Lagernachgiebigkeiten entsteht in der Lagerung eine Verformung, die zu einer ungünstigen Verkippung in der Verzahnung führen kann. Diesen Effekt gibt es insbesondere bei einer einseitigen Lagerung oder relevanter Einsenkung aufgrund hoher Gewichtslast des Rumpfgetriebes bzw. hoher Lagernachgiebigkeit. Die Verkippung in der Verzahnung führt zu einer ungleichmäßigen und ungünstigen Belastung und muss in der Dimensionierung mitberücksichtigt werden, was zu schwereren Auslegungen oder zu Getrieben mit geringerer Drehmomenttragfähigkeit führt. Es besteht ein ständiges Bedürfnis die Verkippung in der Verzahnung zu minimieren, bestenfalls sogar zu eliminieren.

Es ist die Aufgabe der Erfindung Maßnahmen aufzuzeigen, die die Verkippung in der Verzahnung zumindest minimieren.

Die Lösung der Aufgabe erfolgt durch einen Getriebeantriebsstrang mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft einen Getriebeantriebsstrang mit einer Triebstrangachse für eine Windkraftanlage zur Drehmomentübertragung in einer Richtung M, mit einem Getriebegehäuse, zumindest einer ersten um die Triebstrangachse drehbare Planetenstufe oder zumindest einer ersten Planetenstufe und einer nachfolgenden Stirnradstufe, wobei ein Hohlrad der zumindest ersten Planetenstufe als Gehäusekomponente des Getriebegehäuses ausgebildet ist und die erste Planetenstufe einen Planetenträger mit einer ersten Mittelachse mit darin aufgenommenen Planetenrädern aufweist, wobei der Planetenradträger mit einem in der Richtung M betrachtet ersten und zweiten Lager gegenüber dem Getriebegehäuse drehbar gelagert ist, wobei ein gehäuseseitiger Lagersitz des ersten Lagers und ein gehäuseseitiger Lagersitz des zweiten Lagers in Richtung der auf den Getriebeantriebsstrang wirkenden Gewichtskraft F_{RG} einen radialen Versatz Vᵣ zueinander aufweisen.

Für die folgende Betrachtung ist zwischen einem unbelasteten und einem belasteten Zustand zu unterscheiden. In einem Zustand, in der die Gewichtskraft nicht auf den Getriebeantriebsstrang oder auf einzelne seiner Komponente wirkt, kann auch als entlasteter bzw. unbelasteter Zustand bezeichnet werden. In einem solchen Zustand wird der Getriebeantriebsstrang nicht von der eigenen Gewichtskraft belastet, so dass es keine Verformungen infolge von Materialnachgiebigkeiten gibt. Auch ein Spiel zwischen beweglichen Teilen wird nicht zur einen Seite hin ausgenutzt, sondern befindet sich innerhalb seines Spiel- bzw. Toleranzbereichs. Dieser Zustand, in dem die eigene Gewichtskraft nicht wirksam ist, kann zunächst einmal auch als ein virtueller Zustand beschrieben werden, auf den in der Konstruktionsphase in einem entsprechenden Berechnungsprogramm ausgelegt wird. Rein praktisch gesehen kann dieser Zustand, in dem die eigene Gewichtskraft nicht wirksam ist, aber auch während der Montage der Windkraftanlage, bei der ein solcher Getriebeantriebsstrang zum Einsatz kommt, erreicht werden und zwar in dem Augenblick, in dem der Getriebeantriebsstrang und die entsprechenden Getriebekomponenten noch an einem Montagekran hängen, aber bereits an die restliche Struktur der Windkraftanlage angebracht wurden. Denkbar ist auch, dass dieser unbelastete Zustand erreicht wird, wenn die Getriebekomponenten und benachbarte Bauteile, bspw. ein Hauptlagergehäuse, auf einem ebenen Untergrund miteinander verbunden werden, so dass die Gewichtskraft von dem Untergrund abgestützt wird und nicht von den Verbindungsmitteln zwischen den Bauteilen.

Neben der Triebstrangachse A_{D} kann für die erste Planetenstufe eine erste Mittelachse A_{M1} und für das Getriebegehäuse einschließlich eventuell vorhandener weiterer Planetenstufen eine zweite Mittelachse A_{M2} definiert werden. Für dem beschriebenen unbelasteten Zustand kann konkret vorgesehen sein, dass die zweite Mittelachse A_{M2} ausgehend von einem Schnittpunkt mit der ersten Mittelachse A_{M1} in der Richtung der zumindest zweiten Planetenstufe nach vertikal oben geneigt ist. In dem beschriebenen unbelasteten Zustand ist die Mittelachse A_{M2} des Getriebegehäuses unter einem Winkelbetrag α_{VK} zu der Triebstrangachse A_{D} angeordnet, so dass zwischen den Verzahnungen eine Verkippung herrscht. Diese Verkippung in dem unbelasteten Zustand ist allerdings unbeachtlich, da sich der Getriebeantriebsstrang nicht in Betrieb befindet. Wird nun der unbelastete Zustand aufgelöst, so wirkt das infolge der Gewichtskraft des Getriebegehäuses und der weiteren Planetenstufen resultierende Kippmoment und es kommt zu einem Einfedern des Getriebegehäuses und die Verkippung in der Verzahnung reduziert sich oder wird sogar beseitigt.

Durch den vorgeschlagenen Getriebeantriebsstrang kann der negative Effekt der Verkippung der Verzahnung insbesondere der ersten Planetenstufe vermieden oder zumindest so weit reduziert werden, dass ein deutlich besseres Tragverhalten der Verzahnungen erzielt wird. Eine ungleichmäßige Belastung in den beiden Lagern des Planetenträgers der ersten Planetenstufe und innerhalb der Verzahnung der ersten Planetenstufe - insbesondere zwischen Hohlrad und Planetenrädern - wird vermieden. Der initiale bzw. konstruktiv vorgesehene Versatz der gehäuseseitigen Lagersitze bewirkt, dass die Planetenachsen keinen Winkelversatz zu dem Hohlrad im Betriebszustand zeigen und eine gleichmäßige Lagerbelastung und gleichmäßige Belastung in der Verzahnung der ersten Planetenstufe gewährleitet ist.

In einer bevorzugten Ausgestaltung des Getriebeantriebsstrangs ist der radiale Versatz +Vᵣ des Lagersitzes des ersten Lagers bezogen auf die Triebstrangachse A_{D} entgegengesetzt zu der Richtung der auf den Getriebeantriebsstrang wirkenden Gewichtskraft F_{RG} gerichtet. Folglich ist der Lagersitz gegenüber dem Ausgangszustand nach vertikal oben verschoben.

In einer zudem bevorzugten Ausgestaltung des Getriebeantriebsstrangs ist der radiale Versatz -Vᵣ des Lagersitzes des zweiten Lagers bezogen auf die Triebstrangachse in Richtung der auf den Getriebeantriebsstrang wirkenden Gewichtskraft gerichtet ist. Folglich ist der Lagersitz gegenüber dem Ausgangszustand nach vertikal unten verschoben. Somit kann vorgesehen sein, dass das erste Lager, welches das rotorseitige Lager ist, und das zweite Lager, welches das generatorseitige Lager ist, in entgegengesetzte Richtung verschoben sind. In konkreter Ausgestaltung kann vorgesehen sein, dass das erste und das zweite Lager jeweils als Wälzlagerung ausgeführt sind. In einer bezüglich der Lageranordnung möglichen Ausgestaltung kann vorgesehen sein, das erste und das zweite Lager in der Drehmomentrichtung M betrachtet auf entgegengesetzten Seiten des Planetenradträgers 16 angeordnet sind. In einer bezüglich der Lageranordnung alternativen Ausgestaltung kann vorgesehen sein, dass das erste und das zweite Lager als doppelte Kegelrollenlagerung n der Drehmomentrichtung M betrachtet eingangsseitig des Planetenradträgers 16 ausgeführt ist.

In einer weiterhin bevorzugten Ausgestaltung kann vorgesehen sein, eine Mittelachse A_{L} einer Laufbahn des gehäuseseitige Lagerrings des ersten und/oder des zweiten Lagers winklig gegenüber der Triebstrangachse A_{D} angestellt ist.

In einer zudem bevorzugten Ausgestaltung des Getriebeantriebsstrangs ist vorgesehen, dass ein Lageraußenring des ersten Lagers in dem gehäuseseitigen Lagersitz und ein Lagerinnenring oder ein Lageraußenring des zweiten Lagers in dem gehäuseseitigen Lagersitz gehalten ist.

In weiterer Ausgestaltung des Getriebeantriebsstrangs kann vorgesehen sein, dass der zumindest einen Planetenstufe eine mit dem Getriebegehäuse verbundene elektrische Maschine nachgeordnet ist.

Die Aufgabe wird weiterhin gelöst durch eine Windkraftanlage, mit einem Rotorflansch mit einem Rotor und einem Generator, wobei ein den Rotorflansch mit dem Generator verbindender Getriebeantriebsstrang vorgesehen ist und der Getriebeantriebsstrang wie beschrieben ausgebildet ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Darstellung eines Antriebsstrangs einer Windkraftanlage,
Fig. 2: schematisch und auszugsweise einen Getriebeantriebsstrang,
Fig. 3: eine Detaillierung des Getriebeantriebsstrang nach Fig. 2 mit radial versetzter Planetenträgerlagerung,
Fig. 4, 5: eine Ausführung eines Getriebeantriebsstrangs zur Kompensation eines winkligen Abkippens und
Fig. 6: eine Detaillierung des ersten Lagers des ersten Planetenträgers.

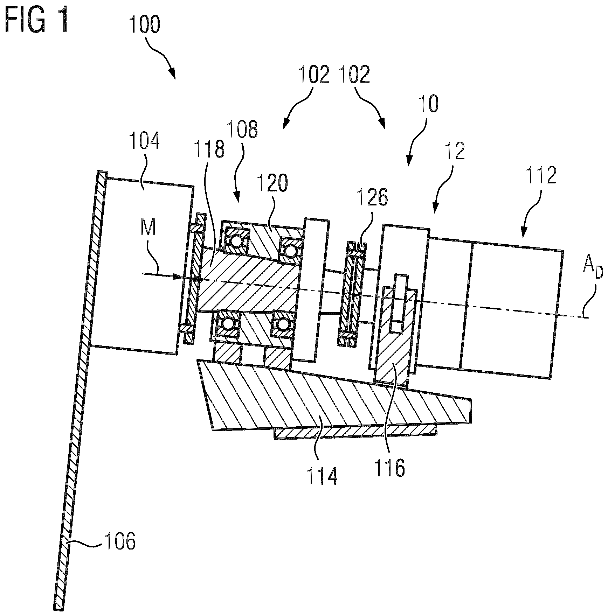

Die Figur 1 zeigt in schematischer und nicht maßstabsgetreuer Darstellung eine Windkraftanlage 100 in einer möglichen Ausführung. Gezeigt ist eine Seitendarstellung. Wesentliches Element der Windkraftanlage 100 ist ein Antriebstrang 102, der vorliegend strukturell einen Rotorflansch 104 mit einem Rotor 106, eine Rotorlagerung 108, eine Getriebekomponente 12 und einen Generator 112 umfassen kann. Über einen Maschinenträger 114 werden zumindest die Rotorlagerung 108 und der Generator 112 über einen nicht dargestellten Turm auf einem Boden abgestützt. Die Rotorlagerung 108 umfasst eine Rotorwelle 118, die z.B. über eine angestellte Kegelrollenlagerung gegenüber einem Rotorlagergehäuse 120 der Rotorlagerung 108 drehbar um eine Triebstrangachse A_{D} gelagert ist. Die Triebstrangachse A_{D} bestimmt eine axiale Richtung. Mit M ist eine Drehmomentrichtung in einem bestimmungsgemäßen Betriebszustand bezeichnet.

An einem Ende der Rotorwelle 118 ist der Rotorflansch 104 und an diesem der Rotor 106 gehalten. Das andere Ende der Rotorwelle 118 ist eine Getriebekomponente 12 antriebsmäßig verbunden, um ein von dem Rotor 106 aufgebrachtes Antriebsmoment zu übersetzen. Die Getriebekomponente 12 ist als Planetengetriebe mit einer oder mehreren Planetenstufen ausgeführt. Die Getriebekomponente 12 ist antriebsmäßig mit dem Generator 112 verbunden. Über einen Flansch 126 ist das Rotorlagergehäuse 120 mit der Getriebekomponente 12 verbunden. Ein Reaktionsmoment der Getriebekomponente 12 - und auch des angeflanschtes Generators 112 - ist über eine Drehmomentstütze 116 gegenüber dem Maschinenträger 114 abgestützt. Hierbei kann in einer ersten Variante die Drehmomentstütze 116 - wie in der Figur 1 dargestellt - die Getriebekomponente 12 unmittelbar mit dem Maschinenträger 114 verbinden. Der Maschinenträger 114, die Rotorlagerung 108 mit Rotorwelle 118, die Drehmomentstütze 116 und die Getriebekomponente 12 können als Triebstranglagerung 10 bezeichnet werden.

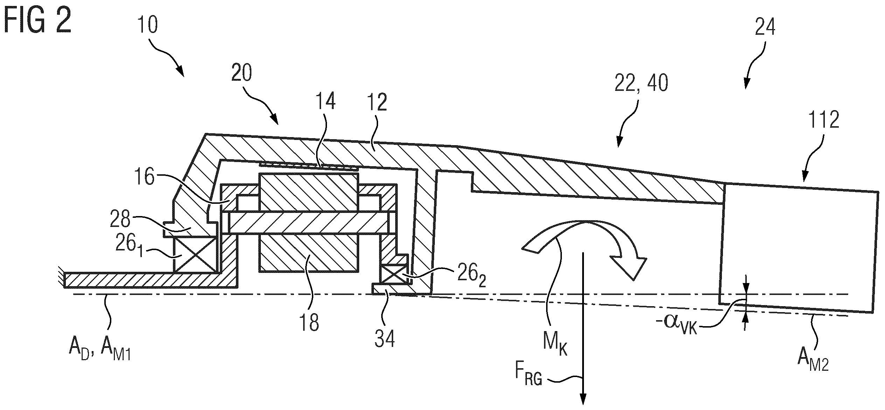

Die Figur 2 zeigt schematisch und auszugsweise einen um die Triebstrangachse A_{D} antreibbaren Getriebeantriebsstrang 10 für eine Windkraftanlage 100, wie beispielsweise in Figur 1 dargestellt. Es ist ein Getriebegehäuse 12 vorgesehen, in dem vorliegend eine erste, eine zweite und eine dritte Planetenstufe 20, 22 und 40 aufgenommen ist. Es kann an das Getriebegehäuse 12 auch ein Generator 112 angeflanscht sein. Die zweite und dritte Planetenstufe 22 und 40 sind vorliegend nur anhand ihrer Bezugszeichen als Platzhalter dargestellt. Ein Hohlrad 14 der ersten Planetenstufe 12 ist als Gehäusekomponente des Getriebegehäuses 12 ausgebildet. Die erste Planetenstufe 20 weist einen Planetenträger 16 mit darin aufgenommenen Planetenrädern 18 auf. Ein Sonnenrad der Planetenstufe 20 ist vorliegend nicht dargestellt. Der Planetenradträger 16 ist zu einer ersten axialen Seite mit einem ersten Lager 26₁ und zu einer zweiten axialen Seite mit einem zweiten Lager 26₂ gegenüber dem Getriebegehäuse 12 drehbar gelagert. Das Getriebegehäuse 12 weist hierfür entsprechende gehäuseseitige Lagersitze 28 und 34 auf. Die Bezeichnungen erste und zweite axiale Seite beziehen sich zunächst auf die Triebstrangachse A_{D}. Ferner wird für diese Betrachtung festgelegt, dass die erste axiale Seite die dem Rotor 106 zugewandte Seite - vgl. Figur 1 - und die zweite axiale Seite die dem Generator 112 gewandte Seite ist.

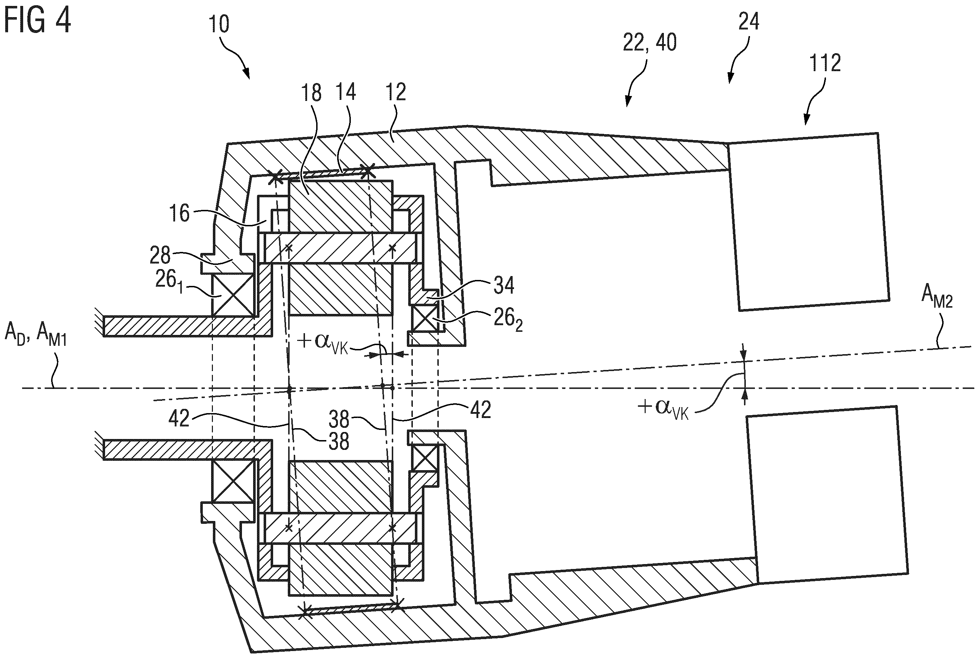

Das Hohlrad 14 der ersten Planetenstufe 20, die zweite und dritte Planetenstufe 22, 40 und der eventuell vorgesehene Generator 112 sind nachfolgend auch mit dem Bezugszeichen 24 versehen und als Rumpfgetriebe bezeichnet. Das Getriebegehäuse 12 wird als Teile des Rumpfgetriebes 24 betrachtet. Für den Planetenträger 16 der erste Planetenstufe 20 und das Rumpfgetriebe 24 können jeweilige komponenteneigene Mittelachsen A_{M1} und A_{M2} definiert werden. Durch das aus der Gewichtskraft F_{RG} des Rumpfgetriebes 24 resultierende Kippmoment M_{K} und infolge eines Lagerspiels und einer Nachgiebigkeit der Lager 26₁, 26₂ erfährt das Rumpfgetriebe 24 ein winkliges Abkippen. Dieses winklige Abkippen ist in der Figur 2 dargestellt und kann als belasteter Zustand bezeichnet werden, im Gegensatz zu einem unbelasteten Zustand, in dem keine Gewichtskraft F_{RG} wirksam ist und der zu der Figur 4 beschrieben wird. Die Mittelachse A_{M2} des Rumpfgetriebes 24 ist folglich um einen Winkel - α_{VK} bezogen auf die Mittelachse A_{M1} des ersten Planetenträgers 16 nach unten abgekippt bzw. geneigt. Die abgekippte Mittelachse A_{M2} des Rumpfgetriebes 24 ist mit der Bezeichnung -α_{VK} bezeichnet, wobei der Betrag des Winkels α_{VK} die Lage der Mittelachse A_{M2} des Rumpfgetriebes 24 zu der Mittelachse A_{M1} des ersten Planetenträgers 16 beschreibt. Das negative Vorzeichen des Winkels α_{VK} beschreibt die Orientierung, in der die Mittelachse A_{M2} zu der Mittelachse A_{M1} steht, nämlich ausgehend von einem Schnittpunkt zwischen Mittelachse A_{M1} und Mittelachse A_{M2} ist die Mittelachse A_{M2} in der Richtung des Rumpfgetriebes 24 nach vertikal unten geneigt.

Das winklige Abkippen -α_{VK} führt zu einer Verkippung der Verzahnung in der Planetenstufe 20, insbesondere zwischen Hohlrad 14 und Planetenträger 16. Für die hier vorgenommene Betrachtung des winkligen Abkippens infolge der Gewichtskraft F_{RG} des Rumpfgetriebes 24 und des resultierenden Kippmoment M_{K} wird von einer festen bzw. unveränderten Position des Planetenträgers 14 ausgegangen.

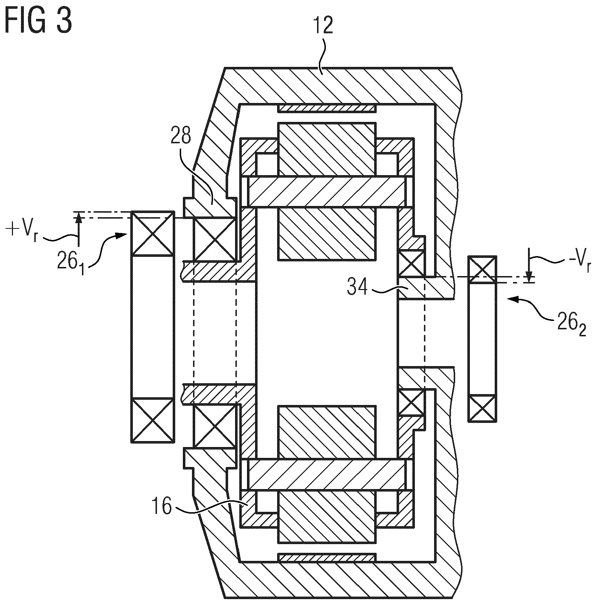

Die Figuren 3, 4 und 5 zeigen eine Ausführung eines Getriebeantriebsstrang 10 zur Kompensation des winkligen Abkippens infolge der Gewichtskraft F_{RG} des Rumpfgetriebes 24. Die Figur 3 zeigt eine Verschiebung der gehäuseseitigen Lagersitz 28 und 34 bezogen auf die Triebstrangachse A_{D}. Der Lagersitz 28 des Lagers 26₁ ist nach vertikal oben verschoben worden und die Verschiebung wird mit +Vᵣ bezeichnet. Der Lagersitz 34 des Lagers 26₂ ist nach vertikal unten verschoben worden und die Verschiebung wird mit -Vᵣ bezeichnet. In der Figur 3 ist sowohl die herkömmliche Lagerposition als auch die veränderte Lagerposition nach Verschieben der gehäuseseitigen Lagersitze 28, 34 dargestellt. In der Figur 3 sind außerdem das Getriebegehäuse 12 und der Planetenträger 16 in einer koaxialen Position zu der Triebstrangachse A_{D} dargestellt. Getriebegehäuse 12 und Planetenträger 16 haben in der Figur 3 noch keine Verkippung infolge einer wirksamen Gewichtskraft F_{RG} oder der Verschiebung der Lagersitze 28, 34 erfahren.

Die Figur 4 zeigt den unbelasteten Zustand, in dem das Rumpfgetriebe 24 nicht von der eigenen Gewichtskraft F_{RG} belastet ist, so dass es keine Verformungen infolge von Materialnachgiebigkeiten gibt. Zudem sind in der Figur 4 die verschobenen gehäuseseitigen Lagersitze 28, 34, wie in der Figur 3 detailliert beschrieben, dargestellt. Der Planetenträger 16 hat in der Figur 3 und 4 eine unveränderte Position, so dass sich in der Figur 4 das Getriebegehäuse 12 durch ein Verschwenken nach vertikal oben der veränderten Position der Lagersitze 28, 34 angepasst hat. Die Mittelachse A_{M2} des Rumpfgetriebes 24 ist folglich um einen Winkel +α_{VK} bezogen auf die Mittelachse A_{M1} des ersten Planetenträgers 16 nach oben geneigt. Mit dem Bezugszeichen 38 sind die stirnseitigen Ebenen des Hohlrades 14 bezeichnet. Mit dem Bezugszeichen 42 sind die stirnseitigen Ebenen der Planetenrädern 18 dargestellt. Zu erkennen ist, dass sich zwischen den Ebenen 38 des Hohlrades 14 einerseits und den Ebenen 42 der Planetenräder 18 andererseits ebenfalls der Winkel +α_{VK} einstellt.

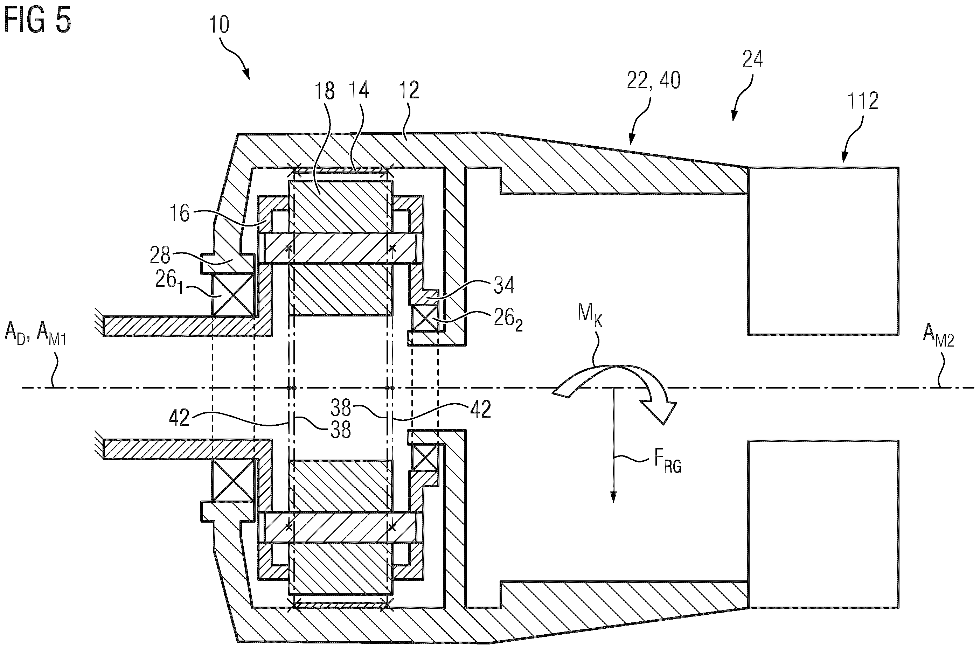

Die Figur 5 zeigt den belasteten Zustand, in dem das Rumpfgetriebe 24 durch das aus der Gewichtskraft F_{RG} resultierende Kippmoment M_{K} ein winkliges Abkippen nach unten erfährt. Infolge der zu Figur 4 beschriebenen Verschiebung der gehäuseseitigen Lagersitz 28 und 34 bezogen auf die Mittelachse A_{M1} liegt die Mittelachse A_{M2} des Rumpfgetriebes 24 nun koaxial zu der Mittelachse A_{M1} des ersten Planetenträgers 16. Dieser koaxiale Verlauf der beiden Mittelachsen A_{M1} und A_{M2} zueinander stellt sicher, dass es zu keiner Verkippung der Verzahnung in der Planetenstufe 22, insbesondere zwischen Hohlrad 30 und Planetenträger 14 kommt, so dass sich zwischen den Ebenen 38 des Hohlrades 14 einerseits und den Ebenen 42 der Planetenräder 18 andererseits kein Winkel abweichend von Null Grad einstellt.

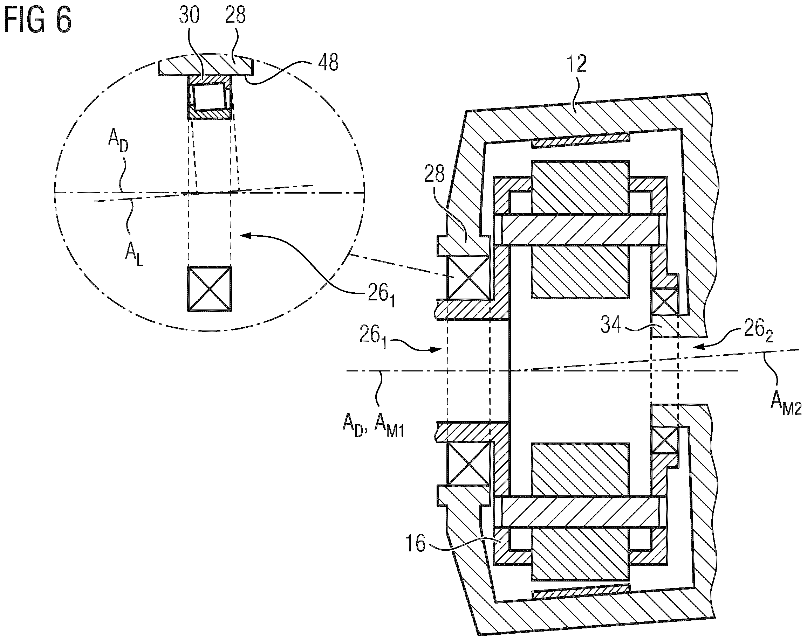

Die Figur 6 zeigt eine Detaillierung des ersten Lagers 26₁. Zu erkennen ist das eine Mittelachse A_{L} einer Laufbahn A_{L} des gehäuseseitige Lagerring 30 des ersten Lagers 26₁ winklig gegenüber der Triebstrangachse A_{D} angestellt ist.

### Bezugszeichenliste

- 10: Getriebeantriebsstrang
- 12: Getriebegehäuse
- 14: Hohlrad
- 16: Planetenträger
- 18: Planetenräder
- 20: Planetenstufe
- 22: Planetenstufe
- 24: Rumpfgetriebe
- 26: Lager
- 28: Lagersitz
- 30: Lageraußenring
- 32: Lagerung
- 34: Lagersitz
- 36: Lagerinnenring
- 38: Stirnebene
- 40: Planetenstufe
- 42: Stirnebene
- 44: Stirnradstufe
- 46: Lageraußenring
- 48: Laufbahn
- 100: Windkraftanlage
- 102: Antriebstrang
- 104: Rotorflansch
- 106: Mehrblattrotor
- 108: Rotorlagerung
- 112: Generator
- 114: Maschinenträger
- 116: Drehmomentstütze
- 118: Rotorwelle
- 120: Rotorlagergehäuse
- 124: Generatorwelle
- 126: Flansch

## Patentansprüche

1. Getriebeantriebsstrang (10) mit einer Triebstrangachse (A_{D}) für eine Windkraftanlage (100) zur Drehmomentübertragung in einer Richtung (M), umfassend ein Getriebegehäuse (12),
zumindest eine erste um die Triebstrangachse (A_{D}) drehbare Planetenstufe (12) oder zumindest eine erste Planetenstufe (12) und eine nachfolgende Stirnradstufe (40), wobei ein Hohlrad (14) der zumindest ersten Planetenstufe (12) als Gehäusekomponente des Getriebegehäuses (12) ausgebildet ist und die erste Planetenstufe (20) einen Planetenträger (16) mit einer ersten Mittelachse (AM₁) mit darin aufgenommenen Planetenrädern (18) aufweist, wobei der Planetenradträger (16) mit einem in der Richtung (M) betrachtet ersten und zweiten Lager (26₁, 26₂) gegenüber dem Getriebegehäuse (12) drehbar gelagert ist,
**dadurch gekennzeichnet, dass**
ein gehäuseseitiger Lagersitz (28) des ersten Lagers (26₁) und ein gehäuseseitiger Lagersitz (34) des zweiten Lagers (26₂) in Richtung der auf den Getriebeantriebsstrang (10) wirkenden Gewichtskraft (F_{RG}) einen radialen Versatz (Vᵣ) zueinander aufweisen.

2. Getriebeantriebsstrang (10) nach Anspruch 1, **dadurch gekennzeichnet, dass** der radiale Versatz (+Vᵣ) des Lagersitzes (28) des ersten Lagers (26₁) bezogen auf die Triebstrangachse (A_{D}) entgegengesetzt zu der Richtung der auf den Getriebeantriebsstrang (10) wirkenden Gewichtskraft (F_{RG}) gerichtet ist.

3. Getriebeantriebsstrang (10) nach Anspruch 1 oder 2, **dadurch gekennzeichnet, dass** der der radiale Versatz (-Vᵣ) des Lagersitzes (34) des zweiten Lagers (26₁) bezogen auf die Triebstrangachse (A_{D}) in Richtung der auf den Getriebeantriebsstrang (10) wirkenden Gewichtskraft (F_{RG}) gerichtet ist.

4. Getriebeantriebsstrang (10) nach einem der Ansprüche 1 bis 3, **dadurch gekennzeichnet, dass** das erste und das zweite Lager (26₁, 26₂) jeweils als Wälzlagerung ausgeführt ist.

5. Getriebeantriebsstrang (10) nach einem der Ansprüche 1 bis 4, **dadurch gekennzeichnet, dass** das erste und das zweite Lager (26₁, 26₂) als doppelte Kegelrollenlagerung in O-Anordnung in der Richtung (M) betrachtet eingangsseitig des Planetenradträgers (16) ausgeführt ist.

6. Getriebeantriebsstrang (10) nach einem der Ansprüche 1 bis 4, **dadurch gekennzeichnet, dass** das erste und das zweite Lager (26₁, 26₂) in der Richtung (M) betrachtet auf entgegengesetzten Seiten des Planetenradträgers (16) angeordnet sind.

7. Getriebeantriebsstrang (10) nach einem der Ansprüche 1 bis 6, **dadurch gekennzeichnet, dass** ein Lageraußenring (30) des ersten Lagers (26₁) in dem gehäuseseitigen Lagersitz (28) und ein Lagerinnenring (36) oder ein Lageraußenring (46) des zweiten Lagers (2611₂) in dem gehäuseseitigen Lagersitz (34) gehalten ist.

8. Getriebeantriebsstrang (10) nach einem der Ansprüche 1 bis 7, **dadurch gekennzeichnet, dass** eine Mittelachse (A_{L}) einer Laufbahn (48) des gehäuseseitigen Lagerrings (30) des ersten und/oder des zweiten Lagers (26₁, 26₂) winklig gegenüber der Triebstrangachse (A_{D}) angestellt ist.

9. Getriebeantriebsstrang (10) nach einem der Ansprüche 1 bis 8, **dadurch gekennzeichnet, dass** der zumindest einen Planetenstufe (20) eine mit dem Getriebegehäuse (12) verbundene elektrische Maschine (112) nachgeordnet ist.

10. Windkraftanlage (100), umfassend einen Rotorflansch (104) mit einem Rotor (106) und einen Generator (112), wobei ein den Rotorflansch (104) mit dem Generator (112) verbindender Getriebeantriebsstrang (10) vorgesehen ist, **dadurch gekennzeichnet, dass** der Getriebeantriebsstrang (10) nach einem der vorangegangenen Ansprüche ausgebildet ist.
